(19) Europäisches Patentamt / European Patent Office / Office européen des brevets

(11) **EP 3 887 771 B1**

(12) **EUROPÄISCHE PATENTSCHRIFT**

(45) Veröffentlichungstag und Bekanntmachung des Hinweises auf die Patenterteilung:
**20.03.2024  Patentblatt 2024/12**

(21) Anmeldenummer: **19797703.6**

(22) Anmeldetag: **31.10.2019**

(51) Internationale Patentklassifikation (IPC):
**G01F 1/34** *(2006.01)*          **G01F 7/00** *(2006.01)*
**G01F 1/84** *(2006.01)*

(52) Gemeinsame Patentklassifikation (CPC):
**G01F 7/00; G01F 7/005;** G01F 1/34; G01F 1/84

(86) Internationale Anmeldenummer:
**PCT/EP2019/079887**

(87) Internationale Veröffentlichungsnummer:
**WO 2020/108910 (04.06.2020 Gazette 2020/23)**

(54) **VERFAHREN ZUM BESTIMMEN EINER DURCHFLUSSMENGE EINES STRÖMUNGSFÄHIGEN MEDIUMS UND MESSSTELLE DAFÜR**

METHOD FOR DETERMINING A FLOW RATE OF A FLOWABLE MEDIUM AND MEASUREMENT POINT THEREFOR

PROCÉDÉ POUR LA DÉTERMINATION D'UN DÉBIT D'UN MILIEU CAPABLE DE S'ÉCOULER ET POSTE DE MESURE POUR CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2018  DE 102018130182**

(43) Veröffentlichungstag der Anmeldung:
**06.10.2021  Patentblatt 2021/40**

(73) Patentinhaber: **Endress + Hauser Flowtec AG**
**4153 Reinach (CH)**

(72) Erfinder:
• **ZHU, Hao**
**85354 Freising (DE)**
• **DRAHM, Wolfgang**
**85435 Erding (DE)**

(74) Vertreter: **Hahn, Christian et al**
**Endress+Hauser Group Services (Deutschland)AG +Co. KG**
**Colmarer Straße 6**
**79576 Weil am Rhein (DE)**

(56) Entgegenhaltungen:
**DE-A1-102007 062 908     DE-A1-102016 011 256**
**US-A1- 2003 167 836**

**Beschreibung**

Die vorliegende Erfindung betrifft ein zum Bestimmen einer Durchflussmenge eines strömungsfähigen Mediums, welches durch eine Messstelle geströmt ist, wobei die Messstelle einen ersten Durchflussmessaufnehmer, der nach einem ersten Messprinzip arbeitet und einen zweiten Durchflussmessaufnehmer, der nach einem zweiten Messprinzip arbeitet umfasst, wobei beide Durchflussmessaufnehmer dazu eingerichtet sind jeweils mit der gesamten Durchflussmenge des Mediums beaufschlagt zu werden, wobei das strömende Medium veränderliche Zustandsregime aufweist, welche die Vertrauenswürdigkeit von ersten Messwerten des ersten Durchflussmessaufnehmers in anderer Weise beeinflussen als zweite Messwerte des zweiten Durchflussmessaufnehmers; wobei die ersten Messwerte des ersten Durchflussmessaufnehmers in einem ersten Zustandsregime des Mediums vertrauenswürdiger sind als die zweiten Messwerte des zweiten Durchflussmessaufnehmers, und die zweiten Messwerte des zweiten Durchflussmessaufnehmers in einem zweiten Zustandsregime des Mediums vertrauenswürdiger sind als die ersten Messwerte des ersten Durchflussmessaufnehmers. Weiterhin betrifft die Erfindung eine Messstelle zur Durchführung des Verfahrens.

Mattar Wade offenbart in US 2003/0167836 A1 eine Messanordnung mit einem Wirbelzähler als primärem Durchflussmessgerät und mit einem sekundären Durchflussmessgerät nach einem anderen Messprinzip. Insofern, als Wirbelzähler bei niedrigen Durchflussraten fehlerhaft messen, übernimmt für diesen Bereich das sekundäre Durchflussmessgerät. In einem überlappenden Messbereich werden die Übertragungsfunktionen der Messgeräte abgeglichen.

In einem gattungsgemäßen Verfahren, das beispielsweise in der Offenlegungsschrift DE 10 2005 046 319 A1 offenbart ist, wird auf Basis der ersten Messwerte ein Beitrag zur Durchflussmenge ermittelt, wenn diese vertrauenswürdiger sind, wobei die zweiten Messwerte verwendet werden, wenn diese vertrauenswürdiger sind, wobei auf Basis der zweiten Messwerte mittels einer Übertragungsfunktion der den zweiten Messwerten entsprechende Beitrag zur Durchflussmenge ermittelt wird.

Es ist die Aufgabe der vorliegenden Erfindung ein Verfahren mit verbesserter Messgenauigkeit und eine Messstelle zur Durchführung des Verfahrens bereitzustellen.

Die Aufgabe wird erfindungsgemäß gelöst durch das Verfahren gemäß dem unabhängigen Patentanspruch 1 und die Messstelle gemäß dem unabhängigen Anspruch 11.

Das erfindungsgemäße Verfahren dient zum Bestimmen einer Durchflussmenge eines strömungsfähigen Mediums, welches durch eine Messstelle geströmt ist, wobei die Messstelle einen ersten Durchflussmessaufnehmer, der nach einem ersten Messprinzip arbeitet und einen zweiten Durchflussmessaufnehmer, der nach einem zweiten Messprinzip arbeitet umfasst, wobei beide Durchflussmessaufnehmer dazu eingerichtet sind jeweils von der gesamten Durchflussmenge des Mediums durchströmt zu werden, wobei das strömende Medium veränderliche Zustandsregime aufweist, welche die Vertrauenswürdigkeit von ersten Messwerten des ersten Durchflussmessaufnehmers in anderer Weise beeinflussen als zweite Messwerte des zweiten Durchflussmessaufnehmers; wobei die ersten Messwerte des ersten Durchflussmessaufnehmers in einem ersten Zustandsregime des Mediums vertrauenswürdiger sind als die zweiten Messwerte des zweiten Durchflussmessaufnehmers, und die zweiten Messwerte des zweiten Durchflussmessaufnehmers in einem zweiten Zustandsregime des Mediums vertrauenswürdiger sind als die ersten Messwerte des ersten Durchflussmessaufnehmers; wobei auf Basis der ersten Messwerte ein Beitrag zur Durchflussmenge ermittelt wird, wenn diese vertrauenswürdiger sind, wobei die zweiten Messwerte verwendet werden, wenn diese vertrauenswürdiger sind, wobei auf Basis der zweiten Messwerte mittels einer zum Zeitpunkt der Ermittlung der zweiten Messwerte gültigen, Version einer Übertragungsfunktion der den zweiten Messwerten entsprechende Beitrag zur Durchflussmenge ermittelt wird, wobei eine aktualisierte Version der Übertragungsfunktion ermittelt, wenn die Messwerte des ersten Durchflussmessaufnehmers vertrauenswürdiger sind, wobei der zuvor auf Basis der zweiten Messwerte ermittelte Beitrag zur Durchflussmenge nachträglich in Abhängigkeit von der aktualisierten Übertragungsfunktion korrigiert wird, wobei der erste Durchflussmessaufnehmer einen Massedurchflussmessaufnehmer umfasst, welcher Massedurchflussratenmesswerte als erste Messwerte erfasst; wobei der zweite Durchflussmessaufnehmer einen Differenzdruckmessaufnehmer umfasst, wobei die zweiten Messwerte Differenzdruckmesswerte umfassen, auf deren Basis mittels der Übertragungsfunktion Massedurchflussratenmesswerte ermittelt werden, wobei die Übertragungsfunktion weiterhin proportional zu einem zweiten Term, der mit der Temperatur des Mediums steigt, wobei die Übertragungsfunktion $F$ die Form $F(dp, T) = C1\ G(dp)\ H(T)$ oder $F(dp, T) = C1\ G(dp,T)$ aufweist, wobei C1 eine Konstante ist, und G und H Funktionen des Differenzdrucks $\Delta p$ bzw. der T sind.

Das erfindungsgemäße Verfahren kann insbesondere zur Betankung von Schiffen, dem so genannten Bunkering eingesetzt werden, wo insbesondere eine eichfähige Erfassung einer durch die Messstelle geströmten Kraftstoffmenge erforderlich ist, da die erfasste Kraftstoffmenge die Grundlage der Bezahlung ist.

Wenngleich Massedurchflussmessaufnehmer bei einphasigen Medien bzw. Flüssigkeiten mit nur geringer Gasbeladung eine überragende Messgenauigkeit und Vertrauenswürdigkeit aufweisen, können diese durch eine höhere Gasbeladung beeinträchtigt werden. Hier erweist sich die Durchflussmessung auf Basis des Differenzdrucks als robustere Alternative. Im Sinne einer besseren Messgenauigkeit ist die Übertragungsfunktion fortlaufend durch Abgleich zu aktualisieren, wenn beide Messprinzipien zur Verfügung stehen. Untersuchungen im Zusammenhang mit der vorliegenden Erfindung haben nun gezeigt, dass es lohnt die Gültigkeit der jüngsten Übertragungsfunktion unmittelbar nach ihrer Verwendung zu überprüfen und ggf. die auf Basis dieser Übertragungsfunktion ermittelte Durchflussmenge nachträglich zu korrigieren.

In einer Ausgestaltung dieser Weiterbildung wird die Konstante C1, die beim Aktualisieren der Übertragungsfunktion empirisch ermittelt.

In einer Ausgestaltung dieser Weiterbildung der Erfindung ist die Übertragungsfunktion proportional zu einem ersten Term der Form $|dp|^{1/c3}$, wobei dp der gemessene Differenzdruck ist, wobei c3 eine Konstante ist die einen Wert zwischen 1,5 und 2,5, insbesondere zwischen 1,75 und 2,25 aufweist.

In einer Ausgestaltung dieser Weiterbildung der Erfindung steigt der zweite Term mit abnehmender Viskosität des Mediums.

In einer Ausgestaltung der Erfindung weist die Übertragungsfunktion F die Form $F(\Delta p, T) = C1\ dp^{1/C2}\ exp(C3\ T)$ oder

$$F(dp, T) = C1\ \Delta p^{1/C2}\ exp(-C3/T) auf,$$

, wobei C1, C2, C3 positive Konstanten sind.

In einer Weiterbildung der Erfindung wird zum nachträglichen Korrigieren des zuvor auf Basis der zweiten Messwerte ermittelten Beitrags zur Durchflussmenge in Abhängigkeit von der aktualisierten Übertragungsfunktion eine Korrekturfunktion verwendet, in welche die aktualisierte Übertragungsfunktion mit einem Gewicht w und die bei der ersten Ermittlung des Beitrags verwendete Übertragungsfunktion mit einem Gewicht (1-w eingeht), wobei $w \leq 1$, wobei das Gewicht w insbesondere zeitabhängig ist und beispielsweise mit dem zeitlichen Abstand des Erfassens der zweiten Messwerte für den zu korrigierenden Beitrag, von der Aktualisierung der Übertragungsfunktion abnimmt.

In einer Weiterbildung der Erfindung werden die ersten Messwerte dann als vertrauenswürdiger bewertet, wenn die Fluktuation der ersten Messwerte, und/oder einer Hilfsmessgröße des ersten Durchflussmessaufnehmers einen jeweiligen Fluktuationsgrenzwert nicht überschreitet.

In einer Ausgestaltung dieser Weiterbildung der Erfindung umfasst die Hilfsmessgröße die Dichte des Mediums bzw. eine Eigenfrequenz einer Schwingungsmode des Massedurchflussmessaufnehmers, die Viskosität des Mediums bzw. die Dämpfung mindestens einer Schwingungsmode und/oder ein Signal-Rausch-Verhältnis mindestens eines Schwingungssensorsignals des Massedurchflussmessaufnehmers.

Die erfindungsgemäße Messstelle umfasst einen ersten Durchflussmessaufnehmer, der nach einem ersten Messprinzip arbeitet; einen zweiten Durchflussmessaufnehmer, der nach einem zweiten Messprinzip arbeitet; und eine Betriebs- und Auswerteschaltung, die dazu eingerichtet ist, das erfindungsgemäße Verfahren zu betreiben.

Die Erfindung wird nun anhand der in den Zeichnungen dargestellten Ausführungsbeispiele näher erläutert. Es zeigt:

Fig 1: ein Beispiel einer Messstelle zur Durchführung des erfindungsgemäßen Verfahrens;

Fig 2a: ein Beispiel von gemessenen Massedurchflussraten $M_1$ und $F(M_2)$, die beim Betanken eines Schiffs erfasst wurden;

Fig 2b: eine überlagerte Darstellung der Daten aus Fig. 2a;

Fig 3: eine schematische Darstellung zur Ermittlung einer Gesamtmenge auf Basis von ersten und zweiten Messwerten;

Fig 4a.: ein Flussdiagramm eines Ausführungsbeispiels des erfindungsgemäßen Verfahrens; und

Fig 4b.: eines Detaildiagramm zum Ausführungsbeispiel aus Fig. 4a.

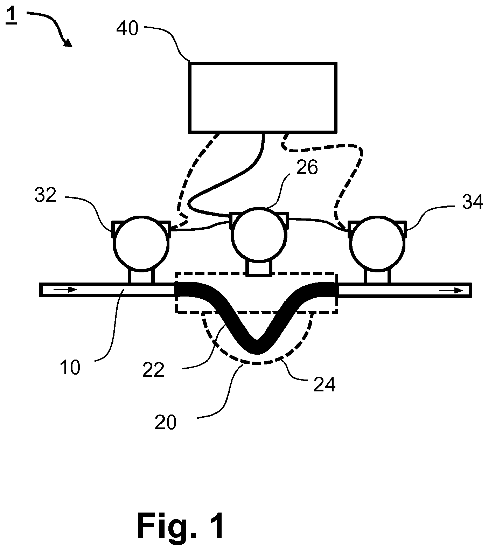

Das in Fig. 1 dargestellte Beispiel einer Messstelle 1 zum Durchführen des erfindungsgemäßen Verfahrens ist in einer Rohrleitung 10 angeordnet, in welcher ein Medium, insbesondere ein Kraftstoff strömt. Die Messstelle 1 umfasst einen Coriolis-Massedurchflussmessaufnehmer 20, der dazu eingerichtet ist, neben Massedurchflussraten auch die Dichte eines Mediums zu erfassen. Ein solcher Coriolis-Massedurchflussmessaufnehmer 20 wird beispielsweise unter der Bezeichnung Promass F, Promass Q oder Promass X von der Anmelderin hergestellt. Der Coriolis-Massedurchflussmessaufnehmer 20 umfasst mindestens einen Oszillator 22 der in einem Gehäuse 24 zwei gebogene, parallel geführte Messrohre umfasst, die zu Biegeschwingungen angeregt werden können. Aus dem Schwingungsverhalten der Messrohre kann in sich bekannter Weise der Massedurchfluss die Dichte des Mediums bestimmt werden.

**EP 3 887 771 B1**

Der Durchflussmessaufnehmer 20 ist in der Zeichnung mit waagerechter Strömungsrichtung und nach unten verlaufendem Messrohrbogen dargestellt. Selbstverständlich, kann der Messrohrbogen zwecks verbesserter Entleerbarkeit auch nach oben verlaufen. Gleichermaßen kann der Durchflussmessaufnehmer auch mit senkrecht verlaufender Strömungsrichtung angeordnet sein. Die Messstelle 1 umfasst weiterhin eine Anordnung zur Durchflussratenmessung auf Basis einer Druckdifferenz, wobei zweckmäßiger Weise der Coriolis-Massedurchflussmessaufnehmer 22 zwischen zwei Druckmesspunkten angeordnet ist, um eine Drossel für die Differenzdruckmessung zu bilden. Im Ausführungsbeispiel umfasst die Anordnung einen ersten Druckmessumformer 32 mit einem ersten Drucksensor und einen zweiten Druckmessumformer 34 mit einem zweiten Drucksensor zwischen denen der Coriolismassedurchflussmessaufnehmer 20 angeordnet ist. Die Drucksensoren können Absolut- oder Relativdrucksensoren sein. Anstelle der beiden Druckmessumformer kann auch ein einziger Differenzdruckmessumformer mit einem Differenzdrucksensor eingesetzt werden, der über Wirkdruckleitungen oder hydraulische Druckmittler, mit dem Druck in der Rohrleitung 10 von zwei Druckmesspunkten beaufschlagbar ist, zwischen denen der Coriolis-Massedurchflussmessaufnehmer 22 angeordnet ist.

Der Coriolis-Massedurchflussmessaufnehmer 20 umfasst weiterhin eine Mess- und Betriebsschaltung 26, die zumindest dazu eingerichtet ist, den Durchflussmessaufnehmer 20 zu betreiben, Messwerte für den Massedurchfluss und ggf. der Dichte zu ermitteln, und die ermittelten Messwerte an eine übergeordnete Einheit 240 auszugeben.

Ob die Druckmessumformer 32, 34 direkt an die Mess- und betriebsschaltung 26 des Coriolis-Massedurchflussmessaufnehmers 20 angeschlossen sind oder an die übergeordnete Einheit 240, ist für die Erfindung nicht von Bedeutung. Es kommt nur darauf an, dass die erforderlichen Messgrößen erfasst und zur Ermittlung der Durchflussmenge zusammengeführt werden.

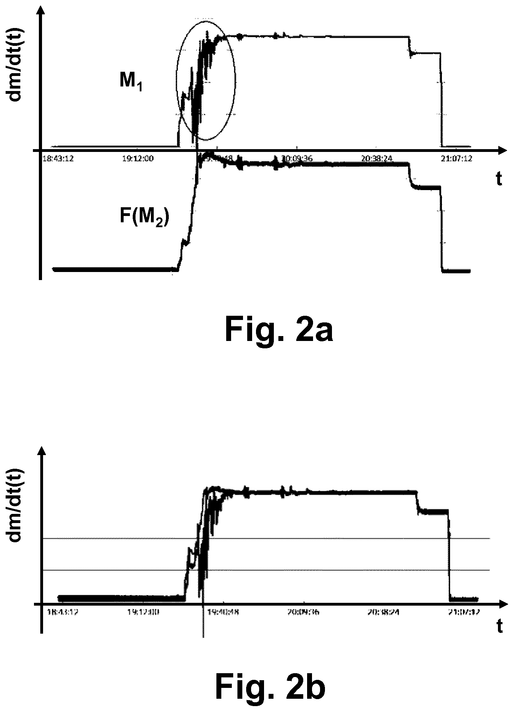

Die Diagramme in Fign. 2a und 2b zeigen Daten von Massedurchflussraten dm/dt(t) als Funktion der Zeit, die einerseits als erste Messwerte $M_1$ eines Coriolis-Massedurchflussmessaufnehmers erfasst wurden und andererseits als Funktion zweiter Messwerte $F(M_2)$ berechnet wurden, wobei die zweiten Messwerte Druckdifferenzen $\Delta p$ zwischen zwei Druckabgriffpunkten einer erfindungsgemäßen Messstelle umfassen, zwischen denen der Coriolis-Massedurchflussmesseraufnehmer angeordnet ist. In Fig. 2a sind die Messdaten im Sinne der Übersichtlichkeit um einen konstanten Wert verschoben. Die ersten Messdaten $M_1$ weisen zu Beginn des Abfüllvorgangs in einer Anstiegsflanke, die mit einer Ellipse markiert ist, starke Fluktuationen auf. Dies liegt an einer großen Menge von Lufteinschlüssen, die sich anfangs im Kraftstoff befinden. Eine genaue Bestimmung der Durchflussmenge ist für die Anstiegsflanke auf Basis der ersten Messdaten damit nicht praktikabel. Die Werte für Massedurchflussrate als Funktion der zweiten Messwerte $F(M_2)$ weisen dagegen in der Anstiegsflanke einen vergleichsweise glatten Verlauf auf, so dass sie sich besser zur Ermittlung der Durchflussmenge eignen und entsprechend ausgewertet werden. In Fig 2b sind die Messdaten aus Fig. 2a überlagert dargestellt, wonach die Messdaten weitgehend kongruent verlaufen. Dies bestätigt den erfindungsgemäßen Ansatz, die ersten und zweiten Messdaten wechselseitig zu nutzen, und ggf. die Übertragungsfunktion F zu aktualisieren, wenn einer der Messdatentypen eine geringere Vertrauenswürdigkeit aufweist.

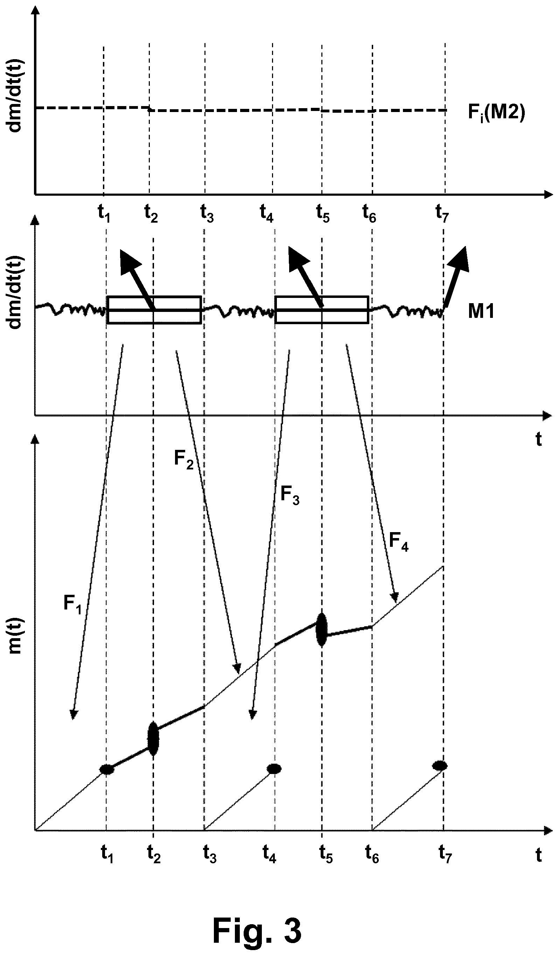

Die Vorgehensweise im Einzelnen wird nun anhand von Fig. 3 erläutert.

Im oberen Teil der Fig. 3 sind die erste Messdaten $M_1$, also Massedurchflussraten dm/dt(t) eines Coriolis-Massedurchflussmessaufnehmers und Massedurchflussraten dm/dt(t) als Funktion von zweiten Messwerte $F_i(M_2)$ dargestellt, wobei die zweiten Messwerte $M_2$ Differenzdruckmesswerte sind. Die ersten Messdaten $M_1$ weisen zwischen den Zeitpunkten $t_1$ und $t_3$ sowie zwischen $t_4$ und $t_6$ gegenüber den nicht gezeigten Massedurchflussraten auf Basis der zweiten Messdaten $M_2$ eine überragende Vertrauenswürdigkeit auf. Daher erfolgt die Bestimmung der Durchflussmenge zwischen $t_1$ und $t_3$ sowie zwischen $t_4$ und $t_6$ auf Basis der ersten Messwerte $M_1$. Außerdem wird in diesen Intervallen eine Übertragungsfunktion aktualisiert, mit welcher die den zweiten Messwerten $M_2$ entsprechenden Massedurchflussraten dm/dt(t) ermittelt werden.

Vor $t_1$ sowie zwischen $t_3$ und $t_4$ bzw. $t_6$ und t7 weisen die ersten Messwerte $M_1$ so starke Fluktuationen auf, dass zu diesen Zeiten die zweiten Messwerte $M_2$ bzw. Massedurchflussratenwerte auf Basis der zweiten Messwerte $M_2$ vertrauenswürdiger sind. Daher wird zu diesen Zeiten die der Beitrag zur Durchflussmenge m(t) auf Basis der zweiten Messwerte $M_2$ ermittelt. Zu Beginn der Messung wird eine zuletzt verfügbare Übertragungsfunktion $F_0$ verwendet um anhand der zweite Messwerte $M_2$ Massedurchflussraten dm/dt(t) = $F_0(M_2)$ zu berechnen. Diese Werte werden über die Zeit integriert, bzw. diskrete Werte werden aufsummiert, um die bis zum Zeitpunkt $t_1$ geflossene Gesamtmenge m(t) zu ermitteln. Das Resultat ist im unteren Teil von Fig. 3 dargestellt.

Ab dem Zeitpunkt $t_1$ sind die ersten Messwerte $M_1$ für den Massedurchfluss dm/dt(t) genauer, so dass diese integriert werden, um die geflossene Gesamtmenge zu erfassen. Gleichzeitig wird in diesem Zeitraum die Übertragungsfunktion F aktualisiert, wobei die aktualisierte Übertragungsfunktion $F_1$ in einem solchem Maße von der Übertragungsfunktion $F_0$ abweicht, dass zum Zeitpunkt $t_2$ eine nachträgliche Korrektur der Gesamtmenge m(t) für die Zeit vor $t_1$ durchgeführt wird. Dies wird am Sprung in der Kurve m(t) deutlich. Tatsächlich erfolgt eine fortlaufende Aktualisierung der Übertragungsfunktion, durch Vergleich zwischen den ersten Messwerten $M_1$ und den Massedurchflussratenwerte auf Basis der zweiten Messwerten $M_2$, so dass ab ts, wenn die ersten Messwerte zum nächsten Mal nicht verwendet werden sollen, eine erneut aktualisierte Übertragungsfunktion $F_2$ zur Verfügung steht. Mittels dieser aktualisierten Übertragungsfunktion $F_2$ werden dann die zweiten Messwerte $M_2$, also die Differenzdruckmesswerte, in die entsprechenden Massedurchflussraten dm/dt(t) = $F_2(M_2)$ umgerechnet. Wenn die ersten Messwerte ab $t_4$ wieder vertrauenswürdiger sind, wiederholt sich der Vorgang ab $t_1$ entsprechend. D.h., die ersten Messwerte $M_1$ bilden wieder die Grundlage zur Ermittlung des laufenden Beitrags zur Gesamtmenge m(t), die Übertragungsfunktion wird aktualisiert und mit der ersten verfügbaren aktualisierten Übertragungsfunktion $F_3$ wird der zuvor ermittelte Beitrag zur Gesamtmenge für den Zeitraum $t_3$ bis $t_4$ auf Basis der Differenzdruckmessung korrigiert. Aufgrund der fortlaufenden Aktualisierung der Übertragungsfunktion wird $F_3$ nach geraumer Zeit durch eine Übertragungsfunktion $F_4$ ersetzt, die dann zur nächsten Berechnung von Massedurchflussraten auf Basis der zweiten Messwerte zur Verfügung steht.

Im Folgenden wird eine geeignete Übertragungsfunktion F vorgestellt. F kann proportional zu einer Konstanten C1 sein, die jeweils beim Aktualisieren der Übertragungsfunktion F empirisch ermittelt wird.

Nach der reinen Lehre Theorie ist der Volumendurchfluss bzw. Massedurchfluss an einer Differenzdruckmessstelle proportional zur Wurzel der Druckdifferenz $\Delta p$, also dm/dt = K $\cdot$ $|\Delta p|^{1/2}$, wobei K ein von dp unabhängiger Faktor ist. Tatsächlich hat sich jedoch gezeigt, dass es sinnvoll sein kann, von dem Exponenten ½ abzuweichen. Dem folgend ist die Übertragungsfunktion proportional zu einem ersten Term der Form $|\Delta p|^{1/C2}$, wobei dp der gemessene Differenzdruck ist, wobei C2 eine Konstante ist, die einen Wert zwischen 1,5 und 2,5, insbesondere zwischen 1,75 und 2,25 aufweist. Dies schließt zwar den theoretischen Wert von C2 = 2 mit ein, ist aber nicht darauf eingeschränkt. Weiterhin ist sollte die Übertragungsfunktion die Temperatur des abzufüllenden Mediums berücksichtigen, da diese die Viskosität des Mediums beeinflusst, welche sich unmittelbar auf die Differenzdruckmessung auswirkt. Erfindungsgemäß weist F daher die Form $F(\Delta p, T) = C1 \cdot L(\Delta p, T)$ auf, wobei C1 eine Konstante ist. Tatsächlich ist die Funktion $L(\Delta p, T)$ separierbar, so dass F beschrieben werden kann als

$$F(\Delta p,\ T) = C1 \cdot G(\Delta p) \cdot H(T).$$

Die Übertragungsfunktion F kann dann insbesondere die Form

$$F(\Delta p,\ T) = C1\ \Delta p^{1/C2}\ \exp(C3\ T)$$

oder

$F(dp, T) = C1\ dp^{1/C2}\ \exp(-C3/T)$ aufweisen, wobei C1, C2, C3 positive Konstanten sind, die insbesondere messstellenspezifisch bzw. medienspezifisch zu ermitteln sind.

In einer Weiterbildung der Erfindung wird zum nachträglichen Korrigieren des zuvor auf Basis der zweiten Messwerte ermittelten Beitrags zur Durchflussmenge in Abhängigkeit von der aktualisierten Übertragungsfunktion eine Korrekturfunktion verwendet, in welche die aktualisierte Übertragungsfunktion mit einem Gewicht w und die bei der ersten Ermittlung des Beitrags verwendete Übertragungsfunktion mit einem Gewicht (1-w) eingeht, wobei w $\leq$ 1, wobei das Gewicht w insbesondere zeitabhängig ist und beispielsweise mit dem zeitlichen Abstand des Erfassens der zweiten Messwerte für den zu korrigierenden Beitrag, von der Aktualisierung der Übertragungsfunktion abnimmt. Beispielsweise kann w gegeben sein als

$$w = ((t_{start}(M_2) + t_{stopp}(M_2))/2 - t(F_{i-1}))\ /\ (t(F_i) - t(F_{i-1})),$$

wobei $t_{start}(M_2)$ und $t_{stopp}(M_2)$ die Zeitpunkte sind, zwischen denen zweiten Messwerte $M_2$ für den Massedurchfluss dm/dt(t) auf Basis einer Differenzdruckmessung verwendet wurden. Diese Zeitpunkte liegen zwischen den Zeitpunkten $t(F_i)$ und $t(F_{i-1})$ welche beispielweise jeweils einen mittleren Zeitpunkt der Datenerfassung zum Ermitteln der aktualisierten Übertragungsfunktionen $F_i$ bzw. $F_{i-1}$ angeben.

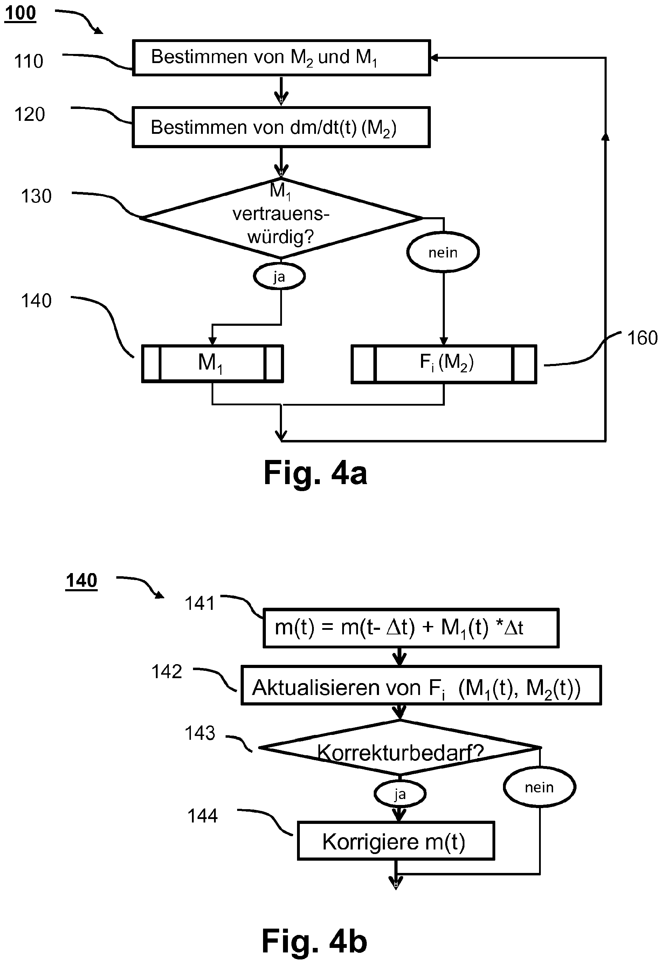

In Fig. 4a ist das erfindungsgemäße Verfahren 100 im Überblick dargestellt.

Zunächst werden in einem ersten Schritt 110 mit den beiden Messaufnehmern die Messgrößen M1 und M2 erfasst, wobei die mit dem Coriolis-Massedurchflussmessaufnehmer erfasste Massedurchflussrate die erste Messgröße $M_1$ bildet, und die mit dem Differenzdruckmessaufnehmer erfasste Druckdifferenz die zweite Messgröße $M_2$ bildet.

Im nächsten Schritt 120 wird mittels der aktuellen Übertragungsfunktion $F_i$ aus einem eine aktuelle Druckdifferenz präsentierenden Messwert M2 eine aktuelle Massedurchflussrate dm/dt ($M_2$) berechnet.

Im nächsten Schritt 130 wird geprüft, ob die erste Messgröße $M_1$ vertrauenswürdig ist. Dies kann unter anderem durch Bewertung der Fluktuationen der ersten Messgröße oder eines anderen Parameters des Coriolis-Massedurchflussmessaufnehmers erfolgen, beispielsweise einer Fluktuation der Dichte oder der Dämpfung der Schwingungen des Oszillators des Coriolis-Massedurchflussmessaufnehmers. Abhängig vom Ergebnis der Prüfung weist das Verfahren für den nächsten Schritt zwei Alternativen auf.

Bei einem positiven Ergebnis werden in einer ersten Anternative des Verfahrens im nächsten Schritt 140 die

ersten Messwerte $M_1$, der weiteren Ermittlung der geflossenen Gesamtmenge m(t) und der Aktualisierung der Übertragungsfunktion zugrunde gelegt.

Bei einem negativen Ergebnis werden stattdessen in einer zweiten Alternative des Verfahrens im nächsten Schritt 160 die Massedurchflussraten auf Basis der zweiten Messwerte $M_2$, der weiteren Ermittlung der geflossenen Gesamtmenge m(t) und der Aktualisierung der Übertragungsfunktion zugrunde gelegt, also:

$$m(t) = m(t - \Delta t) + F_{i.}(M_2) * \Delta t.$$

Nachdem ein neuer Wert für die Gesamtmenge m(t) ermittelt ist, beginnt das Verfahren erneut mit dem Schritt 110 zum Ermitteln von ersten und zweiten Messwerten.

Die erste Alternative 140 des Verfahrens umfasst im Einzelnen mehrere Teilschritte.

Zunächst wird in einem ersten Teilschritt 141 die aktuelle Massedurchflussrate dm/dt(t), multipliziert mit einem Zeitintervall $\Delta t$ zum vorhergehenden Wert der Gesamtmenge m(t - $\Delta t$) addiert um einen aktuellen Wert für die gesamtmenge m(t) zu ermitteln.

Anschließend wird anhand der aktuellen ersten Messwerte $M_1(t)$ und zweiten Messwerte $M_2(t)$ eine aktualisierte Übertragungsfunktion $F_i$ ermittelt, d.h., es wird insbesondere der Koeffizient C1 der oben diskutierten Übertragungsfunktion ermittelt, oder mehrere Koeffizienten dieser Übertragungsfunktion werden ermittelt, mit damit mit der aktualisierten Übertragungsfunktion $F_i$ aktuelle zweite Messwerte $M_2$ auf aktuelle Messwerte $M_1$ abgebildet werden können.

In einem nächsten Teilschritt 143 wird geprüft, ob Korrekturbedarf bei der zuvor ermittelten Gesamtmenge m(t - $\Delta t$) besteht. Dies ist beispielsweise dann der Fall, wenn unmittelbar zuvor die Beiträge zur geflossenen Gesamtmenge m(t) auf Basis der zweiten Messwerte bestimmt wurden, und wenn sich die dabei verwendete Übertragungsfunktion $F_{i-1}$ von der aktuellen Übertragungsfunktion unterscheidet. Der zuvor auf Basis der zweiten Messwerte ermittelte Beitrag zur Gesamtmenge ist dann um die Abweichung bzw. entsprechend der oben vorgestellten Gewichtungsfunktion w zu korrigieren.

**Patentansprüche**

1. Verfahren zum Bestimmen einer Durchflussmenge eines strömungsfähigen Mediums, welches durch eine Messstelle geströmt ist, wobei die Messstelle umfasst:

   einen ersten Durchflussmessaufnehmer (20), der nach einem ersten Messprinzip arbeitet; und
   einen zweiten Durchflussmessaufnehmer (32, 34), der nach einem zweiten Messprinzip arbeitet;
   wobei beide Durchflussmessaufnehmer (20, 32, 34) dazu eingerichtet sind jeweils mit der gesamten Durchflussmenge des Mediums beaufschlagt zu werden;
   wobei das strömende Medium veränderliche Zustandsregime aufweist, welche die Vertrauenswürdigkeit von ersten Messwerten (M1) des ersten Durchflussmessaufnehmers (20) in anderer Weise beeinflussen als zweite Messwerte (M2) des zweiten Durchflussmessaufnehmers (32, 34);
   wobei die ersten Messwerte (M1) des ersten Durchflussmessaufnehmers (20) in einem ersten Zustandsregime des Mediums vertrauenswürdiger sind als die zweiten Messwerte (M2) des zweiten Durchflussmessaufnehmers (32, 34), und die zweiten Messwerte (M2) des zweiten Durchflussmessaufnehmers (32, 34) in einem zweiten Zustandsregime des Mediums vertrauenswürdiger sind als die ersten Messwerte (M1) des ersten Durchflussmessaufnehmers (20);
   wobei auf Basis der ersten Messwerte (M1) ein Beitrag zur Durchflussmenge ermittelt wird, wenn diese vertrauenswürdiger sind,
   wobei die zweiten Messwerte (M2) verwendet werden, wenn diese vertrauenswürdiger sind, wobei auf Basis der zweiten Messwerte (M2) mittels einer zum Zeitpunkt der Ermittlung der zweiten Messwerte (M2) gültigen, Version einer Übertragungsfunktion ($F_i$) der den zweiten Messwerten (M2) entsprechende Beitrag zur Durchflussmenge ermittelt wird,
   wobei eine aktualisierte Version der Übertragungsfunktion ($F_i$) ermittelt wird, wenn die Messwerte des ersten Durchflussmessaufnehmers vertrauenswürdiger sind,
   wobei der zuvor auf Basis der zweiten Messwerte (M2) ermittelte Beitrag zur Durchflussmenge nachträglich in Abhängigkeit von der aktualisierten Übertragungsfunktion ($F_i$) korrigiert wird,
   **dadurch gekennzeichnet, dass**
   der erste Durchflussmessaufnehmer einen Massedurchflussmessaufnehmer umfasst, wobei die ersten Messwerte Massedurchflussratenmesswerte umfassen, und wobei der zweite Durchflussmessaufnehmer einen Differenzdruckmessaufnehmer umfasst, wobei die zweiten Messwerte Differenzdruckmesswerte $\Delta p$ umfassen,

auf deren Basis mittels der Übertragungsfunktion F Massedurchflussratenmesswerte ermittelt werden, wobei die Übertragungsfunktion weiterhin proportional ist zu einem zweiten Term, der mit der Temperatur T des Mediums steigt, wobei die Übertragungsfunktion F die Form

$$F(\Delta p, \ T) = C1 \ G(\Delta p) \ H(T)$$

oder

$$F(\Delta p, \ T) = C1 \ G(\Delta p, T)$$

aufweist,
wobei C1 eine Konstante ist und G und H Funktionen von $\Delta p$ bzw. T sind.

2. Verfahren nach Anspruch 1, wobei die Konstante C1 beim Aktualisieren der Übertragungsfunktion empirisch ermittelt wird.

3. Verfahren nach Anspruch 1 oder 2, wobei die Übertragungsfunktion proportional ist zu einem ersten Term der Form $|\Delta p|^{1/c3}$, wobei dp der gemessene Differenzdruck ist, wobei c3 eine Konstante ist, die einen Wert zwischen 1,5 und 2,5, insbesondere zwischen 1,75 und 2,25 aufweist.

4. Verfahren nach Anspruch 3, wobei der zweite Term mit abnehmender Viskosität des Mediums steigt.

5. Verfahren nach einem der Ansprüche 1 bis 4 wobei die Übertragungsfunktion F die Form

$$F(\Delta p, \ T) = C1 \ \Delta p^{1/C2} \ exp(C3 \ T)$$

oder

$$F(\Delta p, \ T) = C1 \ \Delta p^{1/C2} \ exp(-C3/T)$$

aufweist,
wobei C1, C2, C3 positive Konstanten sind.

6. Verfahren nach einem der vorhergehenden Ansprüche, wobei zum nachträglichen Korrigieren des zuvor auf Basis der zweiten Messwerte ermittelten Beitrags zur Durchflussmenge in Abhängigkeit von der aktualisierten Übertragungsfunktion eine Korrekturfunktion verwendet wird, in welche die aktualisierte Übertragungsfunktion mit einem Gewicht w und die bei der ersten Ermittlung des Beitrags verwendete Übertragungsfunktion mit einem Gewicht (1-w) eingeht.

7. Verfahren nach Anspruch 6, wobei w = 1.

8. Verfahren nach Anspruch 6, wobei das Gewicht w mit dem zeitlichen Abstand des Erfassens der zweiten Messwerte für den zu korrigierenden Beitrag, von der Aktualisierung der Übertragungsfunktion abnimmt.

9. Verfahren nach einem der vorhergehenden Ansprüche, wobei die ersten Messwerte dann als vertrauenswürdiger bewertet werden, wenn die Fluktuation der ersten Messwerte, und/oder einer Hilfsmessgröße des ersten Durchflussmessaufnehmers einen jeweiligen Fluktuationsgrenzwert nicht überschreitet.

10. Verfahren nach einem der Ansprüche 1 bis 9, wobei die Hilfsmessgröße die Dichte des Mediums bzw. eine Eigenfrequenz einer Schwingungsmode des Massedurchflussmessaufnehmers, die Viskosität des Mediums bzw. die Dämpfung mindestens einer Schwingungsmode und/oder ein Signal-Rausch-Verhältnis mindestens eines Schwingungssensorsignals des Massedurchflussmessaufnehmers umfasst.

**11.** Messstelle (1), umfassend:

einen ersten Durchflussmessaufnehmer (20), der nach einem ersten Messprinzip arbeitet; einen zweiten Durchflussmessaufnehmer (32, 34), der nach einem zweiten Messprinzip arbeitet; und eine Betriebs- und Auswerteschaltung, die dazu eingerichtet ist, das Verfahren nach einem der vorhergehenden Ansprüche zu betreiben.

**Claims**

**1.** A method for determining a flow rate of a flowable medium, which flows through a measuring point, wherein the measuring point comprises:

A first flowmeter (20), operating in accordance with the first measuring principle; and
a second flowmeter (32, 34), operating in accordance with the second measuring principle;
wherein both flowmeters (20, 32, 34) are configured to be exposed to the total flow rate of the medium;
wherein the flowing medium exhibits status fluctuations, which impact the reliability of first measured values (M1) of the first flowmeter (20) in a different way to the second measured values (M2) of the second flowmeter (32, 34);
wherein the first measured values (M1) of the first flowmeter (20) are more reliable than the second measured values (M2) of the second flowmeter (32, 34) for a first medium status, and the second measured values (M2) of the second flowmeter (32, 34) are more reliable than the first measured values (M1) of the first flowmeter (20) for a second medium status;

wherein a contribution to the flow rate is determined based on the first measured values (M1) if these are more reliable,
wherein the second measured values (M2) are used if these are more reliable, wherein the contribution to the flow rate corresponding to the second measured values (M2) is determined based on the second measured values (M2) using a version of a transfer function (Fi) valid at the point in time at which the second measured values (M2) were determined,
wherein an updated version of the transfer function (Fi) is determined if the measured values of the first flowmeter are more reliable,
wherein the contribution to the flow rate previously determined based on the second measured values (M2) is subsequently corrected depending on the updated transfer function ($F_i$),
**characterized in that**

the first flowmeter comprises a mass flowmeter, wherein the first measured values comprise mass flow rate measured values, and wherein the second flowmeter comprises a differential pressure flowmeter, wherein the second measured values comprise differential pressure measured values $\Delta p$, based on which mass flow rate measured values are determined using the transfer function F,

wherein the transfer function is still proportional to a second term, which increases with the temperature T of the medium, wherein the transfer function F is

$$F(\Delta p,T) = C1\ G(\Delta p)\ H(T)$$

or

$$F(\Delta p,T) = C1\ G(\Delta p,T),$$

wherein C1 is a constant and G and H are functions of $\Delta p$ or T.

**2.** The method as claimed in claim 1, wherein the constant C1 is determined empirically when updating the transfer function.

**3.** The method as claimed in claim 1 or 2, wherein the transfer function is proportional to a first term of the formula $|\Delta p|^{1/c3}$, wherein dp is the measured differential pressure, wherein c3 is a constant of a value between 1.5 and 2.5, in particular between 1.75 and 2.25.

4. The method as claimed in claim 3, wherein the second term increases as the medium viscosity decreases.

5. The method as claimed in one of claims 1 to 4, wherein the transfer function F is

$$F(\Delta p, T) = C1\, \Delta p^{1/C2} \exp(C3\, T)$$

or

$$F(\Delta p, T) = C1 \Delta p^{1/C2} \exp(-C3/T),$$

wherein C1, C2, and C3 are positive constants.

6. The method as claimed in one of the preceding claims, wherein a correction function is used to subsequently correct the contribution to the flow rate previously determined based on the second measured values depending on the updated transfer function; the updated transfer function enters into the correction function with a weight w and the transfer function used for the first determination of the contribution enters with a weight (1-w).

7. The method as claimed in claim 6, wherein w = 1.

8. The method as claimed in claim 6, wherein the weight w decreases as the time between recording the second measured values for the contribution to be corrected and the update of the transfer function increases.

9. The method as claimed in one of the preceding claims, wherein the first measured values are considered more reliable when the fluctuation of the first measured values and/or an auxiliary measured variable of the first flowmeter does not exceed a specific fluctuation limit value.

10. The method as claimed in one of the claims 1 to 9, wherein the auxiliary measured variable comprises the medium density or a natural frequency of a vibration mode of the mass flowmeter, the medium viscosity or the attenuation of at least one vibration mode and/or a signal-to-noise ratio of at least one vibration sensor of the mass flowmeter.

11. A measuring point (1), comprising:
A first flowmeter (20), operating in accordance with the first measuring principle; a second flowmeter (32, 34), operating in accordance with the second measuring principle; and an operating and evaluation circuit, which is configured to operate the method as claimed in one of the preceding claims.

**Revendications**

1. Procédé destiné à la détermination d'un débit d'un produit apte à s'écouler, lequel produit s'est écoulé à travers un point de mesure, le point de mesure comprenant

un premier capteur de débit (20), lequel fonctionne selon un premier principe de mesure ; et
un deuxième capteur de débit (32, 34), lequel fonctionne selon un deuxième principe de mesure ;
les deux capteurs de débit (20, 32, 34) étant conçus pour être alimentés chacun par la totalité du débit de produit ;
le produit en écoulement présentant des régimes d'état variables, lesquels influencent la fiabilité des premières valeurs mesurées (M1) du premier capteur de débit (20) d'une autre manière que les deuxièmes valeurs mesurées (M2) du deuxième capteur de débit (32, 34) ;
les premières valeurs mesurées (M1) du premier capteur de débit (20) étant plus fiables dans un premier régime d'état du produit que les deuxièmes valeurs mesurées (M2) du deuxième capteur de débit (32, 34), et les deuxièmes valeurs mesurées (M2) du deuxième capteur de débit (32, 34) étant plus fiables dans un deuxième régime d'état du produit que les premières valeurs mesurées (M1) du premier capteur de débit (20) ;
une contribution au débit étant déterminée sur la base des premières valeurs mesurées (M1) lorsqu'elles sont plus fiables,
les deuxièmes valeurs mesurées (M2) étant utilisées si elles sont plus fiables, la contribution au débit correspondant aux deuxièmes valeurs mesurées (M2) étant déterminée sur la base des deuxièmes valeurs mesurées (M2) au moyen d'une version d'une fonction de transfert ($F_i$) valable au moment de la détermination des deuxièmes valeurs mesurées (M2),

une version actualisée de la fonction de transfert ($F_i$) étant déterminée lorsque les valeurs mesurées du premier capteur de débit sont plus fiables, la contribution au débit déterminée auparavant sur la base des deuxièmes valeurs mesurées (M2) étant corrigée ultérieurement en fonction de la fonction de transfert actualisée ($F_i$),

**caractérisé en ce que**

le premier capteur de débit comprend un capteur de débit massique, les premières valeurs mesurées comprenant des valeurs mesurées de débit massique, et le deuxième capteur de débit comprend un capteur de pression différentielle, les deuxièmes valeurs mesurées comprenant des valeurs mesurées de pression différentielle $\Delta p$, sur la base desquelles des valeurs mesurées de débit massique sont déterminées au moyen de la fonction de transfert F,

la fonction de transfert étant en outre proportionnelle à un deuxième terme, lequel augmente avec la température T du produit

la fonction de transfert F présentant la forme

$$F(\Delta p, T) = C1\ G(\Delta p)\ H(T)$$

ou

$$F(\Delta p, T) = C1\ G(\Delta p, T),$$

C1 étant une constante et G et H étant respectivement des fonctions de $\Delta P$ et T.

2. Procédé selon la revendication 1, pour lequel la constante C1 est déterminée de manière empirique lors de l'actualisation de la fonction de transfert.

3. Procédé selon la revendication 1 ou 2, pour lequel la fonction de transfert est proportionnelle à un premier terme de la forme $|\Delta p^{1/c3}|$, dp étant la pression différentielle mesurée, c3 étant une constante ayant une valeur comprise entre 1 et 2,5, notamment entre 1,75 et 2,25.

4. Procédé selon la revendication 3, pour lequel le deuxième terme augmente lorsque la viscosité du produit diminue.

5. Procédé selon l'une des revendications 1 à 4, pour lequel la fonction de transfert F est de la forme

$$F(\Delta p, T) = C1\ \Delta p^{1/C2}\ \exp(C3\ T)$$

ou

$$F(\Delta p, T) = C1\ \Delta p^{1/C2}\ \exp(-C3/T),$$

C1, C2, C3 étant des constantes positives.

6. Procédé selon l'une des revendications précédentes, pour lequel, pour corriger ultérieurement la contribution au débit déterminée précédemment sur la base des deuxièmes valeurs mesurées en fonction de la fonction de transfert actualisée, on utilise une fonction de correction dans laquelle la fonction de transfert actualisée est intégrée avec un poids w et la fonction de transfert utilisée lors de la première détermination de la contribution est intégrée avec un poids (1-w).

7. Procédé selon la revendication 6, pour lequel w = 1.

8. Procédé selon la revendication 6, pour lequel le poids w diminue avec l'intervalle de temps entre l'acquisition des deuxièmes valeurs mesurées pour la contribution à corriger et l'actualisation de la fonction de transfert.

9. Procédé selon l'une des revendications précédentes, pour lequel les premières valeurs mesurées sont évaluées comme étant plus fiables lorsque la fluctuation des premières valeurs mesurées, et/ou d'une grandeur de mesure auxiliaire du premier capteur de débit ne dépasse pas une valeur limite de fluctuation respective.

10. Procédé selon l'une des revendications 1 à 9, pour lequel la grandeur de mesure auxiliaire comprend la densité du produit ou une fréquence propre d'un mode de vibration du capteur de débit massique, la viscosité du produit ou l'amortissement d'au moins un mode de vibration et/ou un rapport signal/bruit d'au moins un signal de capteur de vibration du capteur de débit massique.

11. Point de mesure (1) comprenant :
un premier capteur de débit (20) fonctionnant selon un premier principe de mesure ; un deuxième capteur de débit (32, 34) fonctionnant selon un deuxième principe de mesure ; et un circuit d'exploitation et d'évaluation, lequel est conçu pour exploiter le procédé selon l'une des revendications précédentes.

**Fig. 1**

**Fig. 2a**

**Fig. 2b**

**Fig. 3**

**100**

110 — Bestimmen von $M_2$ und $M_1$

120 — Bestimmen von dm/dt(t) ($M_2$)

130 — $M_1$ vertrauens- würdig?

ja

nein

140 — $M_1$

$F_i$ ($M_2$) — 160

# Fig. 4a

**140**

141 — $m(t) = m(t-\Delta t) + M_1(t) *\Delta t$

142 — Aktualisieren von $F_i$ ($M_1(t), M_2(t)$)

143 — Korrekturbedarf?

ja

nein

144 — Korrigiere m(t)

# Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030167836 A1

- DE 102005046319 A1